# EUROPEAN PATENT APPLICATION

(11) **EP 4 498 364 A1**
(43) Date of publication of application: **29.01.2025**
(21) Application number: 23774426.3
(22) Date of filing: 02.03.2023
(51) Int. Cl.: G10L 15/10, G10L 15/00

(54) **INFORMATION PROCESSING DEVICE, INFORMATION PROCESSING METHOD, AND PROGRAM**

(30) Priority: 22.03.2022 JP 2022045252
(71) Applicant: Sony Group Corporation, Tokyo 108-0075 (JP)
(72) Inventor: TAKASHIMA, Kouichiro, Tokyo 108-0075 (JP); HOSHINO, Hironari, Tokyo 108-0075 (JP); KASHIWAGI, Yasutaka, Tokyo 108-0075 (JP); KATO, Koichi, Tokyo 108-0075 (JP); HASEGAWA, Masaaki, Tokyo 108-0075 (JP); SHITE, Toshiyuki, Tokyo 108-0075 (JP); WAKU, Kenji, Tokyo 108-0075 (JP)
(74) Representative: D Young & Co LLP
(86) International application number: PCT/JP2023/007742
(87) International publication number: WO 2023/181827

(57) **Abstract**

The present technology assists a user in having an effective conversation in remote multiplex conversation.

A display processing unit performs processing of displaying, on the basis of a result of topic analysis processing of identifying an ongoing topic on the basis of multiplex conversation data and giving a title indicating a summary of each topic, the ongoing topic using the title. The user in remote multiplex conversation can easily recognize not only a topic in which the user is participating but also other topics that are ongoing at the same time, and can easily find an ongoing topic of interest and newly participate in the topic. The present technology is therefore capable of assisting the user in having an effective conversation in the remote multiplex conversation.

## Description

### TECHNICAL FIELD

The present technology relates to an information processing device, an information processing method, and a program, and more particularly, to an information processing device and the like for assisting a user in having a smooth and effective conversation in remote multiplex conversation.

### BACKGROUND ART

Remote multiplex conversation (a meeting, a drinking party, or the like) made by a large number of users is assumed. In this case, each user can naturally understand a topic in which he/she participates, but it is not easy for the user to understand what kind of different topics are ongoing from multiplex conversation voices that many people are uttering, and even if another interesting topic comes up, it is difficult to participate in the topic. Furthermore, it is also difficult to understand which users are participating in the different topics from the multiplex conversation voices that many people are uttering. For example, Patent Document 1 discloses extracting a topic explicitly designated by a user from a plurality of topics.

### CITATION LIST

### PATENT DOCUMENT

Patent Document 1: Japanese Patent Application Laid-Open No. 2015-122100

### SUMMARY OF THE INVENTION

### PROBLEMS TO BE SOLVED BY THE INVENTION

It is therefore an object of the present technology to assist a user in having a smooth and effective conversation in remote multiplex conversation.

### SOLUTIONS TO PROBLEMS

A concept of the present technology is
an information processing device including
a display processing unit that performs processing of displaying, on the basis of a result of topic analysis processing of identifying an ongoing topic on the basis of multiplex conversation data and giving a title indicating a summary of each topic, the ongoing topic using the title.

In the present technology, the display processing unit performs processing of displaying the ongoing topic using the title. This processing is performed on the basis of the result of the topic analysis processing of identifying an ongoing topic on the basis of the multiplex conversation data and giving a title indicating a summary of each topic.

As described above, in the present technology, the ongoing topic is displayed using the title, and the user in the remote multiplex conversation can easily recognize not only the topic in which the user is participating but also different topics that are ongoing at the same time, and can also easily find an ongoing topic of interest and newly participate in the topic. The present technology is therefore capable of assisting the user in having a smooth and effective conversation in the remote multiplex conversation.

Note that, in the present technology, for example, a voice processing unit that performs processing of making voices for each displayed topic audible in a direction and at a volume associated with a topic display position may be further included. It is therefore possible for the user in the remote multiplex conversation to distinguish voices for each ongoing topic on the basis of the direction and the volume and alleviate multiple voice congestion.

Furthermore, in the present technology, for example, in the topic analysis processing, processing of associating a participating user with each topic may be further performed, and the display processing unit may perform processing of further displaying a participating user associated with each displayed topic. It is therefore possible for the user in the remote multiplex conversation to easily confirm a user participating in each topic.

In this case, for example, the display processing unit may display the participating user using a face image. In this case, the user in the remote multiplex conversation can confirm the user participating in each topic using the face image. Furthermore, in this case, for example, the display processing unit may display the ongoing topic in a metaverse space and display the participating user using an avatar. In this case, the user in the remote multiplex conversation can confirm the ongoing topic in the metaverse space, and can confirm the user participating in each topic using the avatar.

Furthermore, in the present technology, for example, the display processing unit may display, on the basis of a result of topic classification processing of obtaining a degree of interest of an individual user in each topic, the ongoing topic in a manner as to make a level of the degree of interest of the individual user visible. It is therefore possible for the individual user in the remote multiplex conversation to easily confirm, when a plurality of topics is ongoing, the degree of interest of the individual user him/herself in each topic.

In this case, for example, the display processing unit may display the ongoing topics side by side in a direction of a degree-of-interest axis in descending order of the level of the degree of interest of the individual user. In this case, when a plurality of topics is ongoing, the individual user in the remote multiplex conversation can determine the level of the degree of interest of the individual user him/herself in each topic on the basis of a position of each topic in the direction of the degree-of-interest axis.

Furthermore, in this case, for example, the display processing unit may display the participating user associated with each displayed topic using a face image and enlarges a face image of a participating user associated with a topic having a higher degree of interest. In this case, when a plurality of topics is ongoing, the individual user in the remote multiplex conversation can determine the level of the degree of interest of the individual user him/herself in each topic on the basis of the size of the face image of the participating user associated with each topic.

Furthermore, in the present technology, for example, the display processing unit may display, on the basis of a result of topic classification processing of obtaining a degree of intimacy between the associated participating user and an individual user for each topic, the ongoing topic in a manner as to make a level of the degree of intimacy between the associated participating user (group) and the individual user visible. It is therefore possible for the individual user in the remote multiplex conversation to easily confirm, when a plurality of topics is ongoing, the degree of intimacy between the individual user him/herself and the participating user (group) associated with each topic.

In this case, for example, the display processing unit may display the ongoing topics side by side in a direction of a degree-of-intimacy axis in descending order of the level of the degree of intimacy between the associated participating user and the individual user. In this case, when a plurality of topics is ongoing, the individual user in the remote multiplex conversation can determine the level of the degree of intimacy between the individual user him/herself and the participating user (group) associated with each topic on the basis of the arrangement order of each topic in the direction of the degree-of-intimacy axis.

Furthermore, in the present technology, for example, the display processing unit may display, on the basis of a result of topic classification processing of obtaining a degree of interest of an individual user and obtaining a degree of intimacy between the associated participating user and the individual user for each topic, the ongoing topic in a manner as to make a level of the degree of interest of the individual user and a level of the degree of intimacy between the associated participating user and the individual user visible. It is therefore possible for the individual user in the remote multiplex conversation to easily confirm, when a plurality of topics is ongoing, the level of the degree of interest of the individual user him/herself in each topic and the level of the degree of intimacy between the individual user him/herself and the participating user (group) associated with each topic.

In this case, for example, the display processing unit may arrange and display the ongoing topic at a coordinate position in a two-dimensional coordinate system formed by a degree-of-interest axis and a degree-of-intimacy axis, the coordinate position being determined on the basis of the level of the degree of interest of the individual user and the level of the degree of intimacy between the associated participating user and the individual user. In this case, the individual user in the remote multiplex conversation can easily determine, when a plurality of topics is ongoing, the level of the degree of interest of the individual user him/herself in each topic and the level of the degree of intimacy between the individual user him/herself and the participating user (group) associated with each topic on the basis of the position of each topic arranged at coordinates in the two-dimensional coordinate system formed by the degree-of-interest axis and the degree-of-intimacy axis.

Furthermore, in the present technology, for example, the display processing unit may perform processing of further displaying, on the basis of a result of suggestion processing of suggesting, to an individual user, participation in a different topic that is currently ongoing in accordance with a degree of satisfaction with a topic in which the individual user is currently participating, the suggestion to participate in the different topic that is currently ongoing. It is therefore possible for the individual user in the remote multiplex conversation to receive, in a case where the degree of satisfaction with the topic in which the individual user is currently participating is low, the suggestion to participate in the different topic that is currently ongoing, for example.

In this case, for example, in the suggestion processing, the degree of satisfaction may be obtained on the basis of frequency of utterance of the individual user and/or physical information regarding the individual user. In this case, it is possible to appropriately obtain the degree of satisfaction of the individual user with the topic in which the individual user is currently participating.

Furthermore, in this case, for example, in the suggestion processing, in a case where the degree of satisfaction with the topic in which the individual user is currently participating is lower than a threshold, and a degree of fitting with the different topic that is currently ongoing is higher than a degree of fitting with the topic in which the individual user is currently participating, the participation in the different topic may be suggested. It is therefore possible for the individual user in the remote multiplex conversation to receive, in a case where the degree of satisfaction with the topic in which the individual user is currently participating is low, the suggestion to participate in the different topic that is currently ongoing and is higher in the degree of fitting than the topic in which the individual user is currently participating.

Here, for example, in the suggestion processing, the degree of fitting may be obtained on the basis of a degree of interest of the individual user in a topic and a degree of intimacy between a participating user associated with the topic and the individual user. In this case, it is possible to appropriately obtain the degrees of fitting of the individual user with the topic in which the individual user is currently participating and the different top that is currently ongoing.

Furthermore, in the present technology, for example, the display processing unit may perform processing of further displaying, on the basis of a result of suggestion processing of suggesting a topic that is not currently ongoing in accordance with a degree of satisfaction with a topic that the individual user is currently participating, the suggestion of the topic that is not currently ongoing. It is therefore possible for the individual user in the remote multiplex conversation to receive, in a case where the degree of satisfaction with the topic in which the individual user is currently participating is low, the suggestion of the topic that is not currently ongoing.

In this case, for example, in the suggestion processing, in a case where the degree of satisfaction with the topic in which the individual user is currently participating is lower than a threshold, and a degree of satisfaction with a predetermined topic in which another user similar in attribute to the individual user participated in the past is higher than the threshold, the predetermined topic is suggested as the topic that is not currently ongoing. It is therefore possible for the individual user in the remote multiplex conversation to receive, in a case where the degree of satisfaction with the topic in which the individual user is currently participating is low, the suggestion of the topic that is not ongoing, the topic being expected to have a higher degree of satisfaction than the topic in which the individual user is currently participating.

In this case, for example, in the suggestion processing, processing of further making, to the individual user, a suggestion to discuss the topic that is not currently ongoing together with a participating user having a highest degree of intimacy with the individual user among participating users participating in each currently ongoing topic may be performed, and the display processing unit may perform processing of further displaying the suggestion to discuss the topic that is not currently ongoing together with the participating user having the highest degree of intimacy. It is therefore possible for the individual user to receive a suggestion of an appropriate participating user (group) for discussing the suggested topic that is not ongoing.

Furthermore, another concept of the present technology is
an information processing method including:
performing processing of identifying an ongoing topic on the basis of multiplex conversation data and giving a title indicating a summary of each topic.

Furthermore, another concept of the present technology is
a program for causing a computer to execute an information processing method, the method including:
performing processing of identifying an ongoing topic on the basis of multiplex conversation data and giving a title indicating a summary of each topic.

### BRIEF DESCRIPTION OF DRAWINGS

Fig. 1 is a block diagram illustrating a configuration example of an information processing device according to a first embodiment.
Fig. 2 is a diagram illustrating an example of information regarding a degree of intimacy between each user and the other users and an example of a result of grouping on the basis of the information regarding a degree of intimacy between each user and the other users.
Fig. 3 is a diagram illustrating an example of processing performed by a topic analysis unit.
Fig. 4 is a diagram illustrating an example of information regarding a degree of interest of a user A in a subject of interest and an example of information regarding a degree of intimacy between the user A and the other users.
Fig. 5 is a diagram illustrating an example of a degree of interest of the user A in each topic, the degree of interest being obtained by a topic classification unit, and an example of a degree of intimacy between the user A and a user participating in each topic, the degree of intimacy being obtained by the topic classification unit.
Fig. 6 is a diagram illustrating an example of a display pattern of ongoing topics.
Fig. 7 is a diagram illustrating another example of the display pattern of ongoing topics.
Fig. 8 is a diagram illustrating another example of the display pattern of ongoing topics.
Fig. 9 is a block diagram illustrating a configuration example of an information processing device according to a second embodiment.
Fig. 10 is a diagram for describing an example of processing of suggesting participation in a different topic that is currently ongoing.
Fig. 11 is a diagram illustrating a display example of a terminal of a target user in a case where participation in a different topic that is currently ongoing is suggested.
Fig. 12 is a diagram for describing an example of processing of suggesting not only a topic that is not currently ongoing but also a participating user (group) who discusses the topic.
Fig. 13 is a diagram illustrating a display example of the terminal of the target user in a case where not only a topic that is not currently ongoing but also a participating user (group) who discusses the topic is suggested.
Fig. 14 is a block diagram illustrating a configuration example of hardware of a computer.

### MODE FOR CARRYING OUT THE INVENTION

Hereinafter, a mode for carrying out the invention (hereinafter referred to as an "embodiment") will be described. Note that the description will be given in the following order.
1. First Embodiment
2. Second Embodiment
3. Modification

### <1. First Embodiment>

### [Configuration of information processing device]

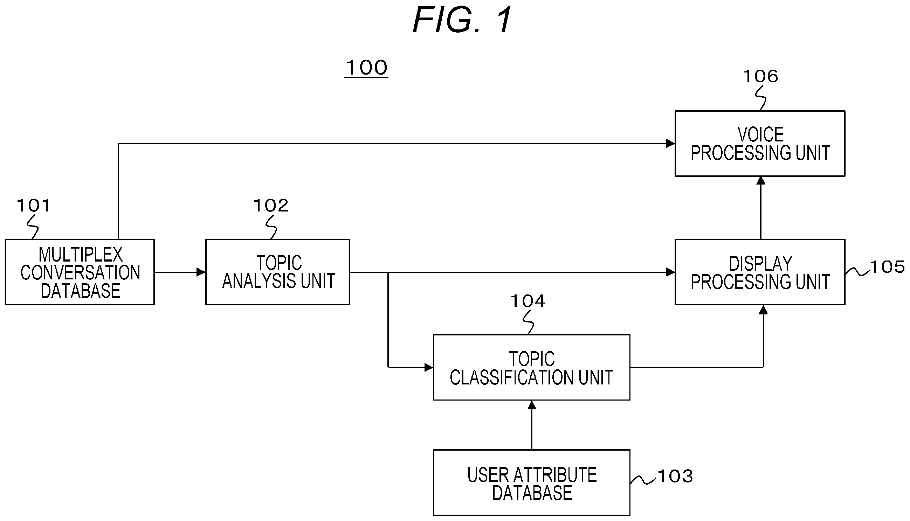

Fig. 1 illustrates a configuration example of an information processing device 100 according to a first embodiment. The information processing device 100 is a device for assisting a user in having a smooth and effective conversation in remote multiplex conversation (a meeting, a drinking party, or the like), and is managed by an organizer of the remote multiplex conversation.

Note that, although no detailed description will be given below, it is conceivable that the organizer of the remote multiplex conversation start the conversation after grouping users. In this case, at the beginning, each user can have a conversation within a group. This grouping is performed so as to allow a topic to smoothly come up.

This grouping is performed, for example, on the basis of information regarding a degree of intimacy between each user and the other users. In this case, a plurality of groups each including users having a higher degree of intimacy with each other is generated, so that it is expected that a topic smoothly comes up.

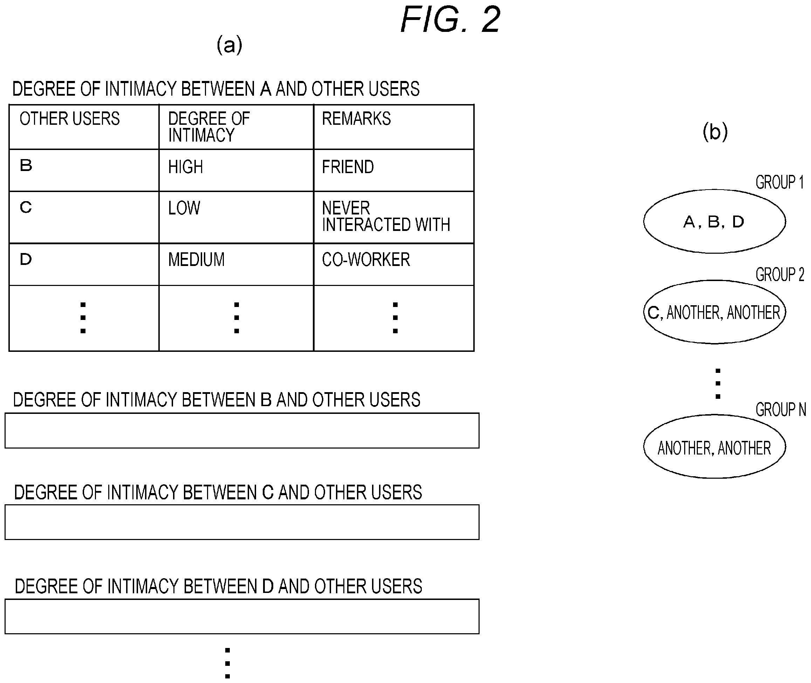

Fig. 2(a) illustrates an example of information regarding a degree of intimacy between each of a plurality of users A, B, C, D,... and the other users. In this example, only information regarding a degree of intimacy between the user A and the other users is illustrated in detail, but the same applies to information regarding a degree of intimacy between each of the other users and the other users. Regarding the user A, a degree of intimacy with the user B is "high", a degree of intimacy with the user C is "low", and a degree of intimacy with the user D is "medium". Note that, in this example, the degree of intimacy has three levels of "high", "medium", and "low", but is not limited thereto. Fig. 2(b) illustrates an example of a result of grouping based on the information regarding a degree of intimacy between each user and the other users as illustrated in Fig. 2(a), and illustrates a state where N groups including a group 1 to a group N are generated.

The information processing device 100 includes a multiplex conversation database 101, a topic analysis unit 102, a user attribute database 103, a topic classification unit 104, a display processing unit 105, and a voice processing unit 106.

The multiplex conversation database 101 stores voice data of each user (participant) in the remote multiplex conversation, that is, multiplex conversation data. The multiplex conversation data stored in the multiplex conversation database 101 is updated sequentially over time to reflect the latest data.

The topic analysis unit 102 performs processing of identifying an ongoing topic on the basis of the multiplex conversation data stored in the multiplex conversation database 101, giving a title indicating a summary of each topic, and further associating a participating user with each topic. The topic analysis unit 102 performs this processing using artificial intelligence (AI), for example.

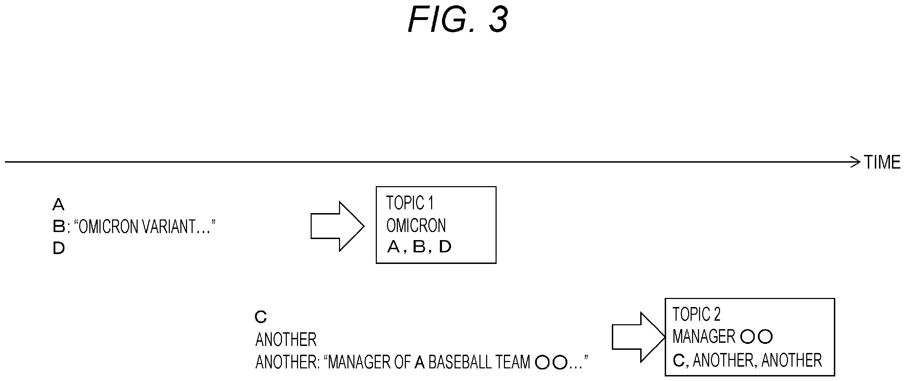

Fig. 3 illustrates an example of the processing performed by the topic analysis unit 102. In this example, at a certain timing, a conversation about Omicron is ongoing among users (A, B, D). In this case, the topic analysis unit 102 identifies this topic as "topic 1", gives "Omicron" as a summary title, and further associates "A, B, D" as the users participating in this topic. Furthermore, in this example, at a certain timing, a conversation about manager ○○ is ongoing among users (C, another, another). In this case, the topic analysis unit 102 identifies this topic as "topic 2", gives "manager ○○" as a summary title, and further associates "C, another, another" as users participating in this topic.

The user attribute database 103 holds attribute information regarding each user. The attribute information includes, for example, information regarding a degree of intimacy with another user, information regarding a degree of interest in various subjects of interest, and the like.

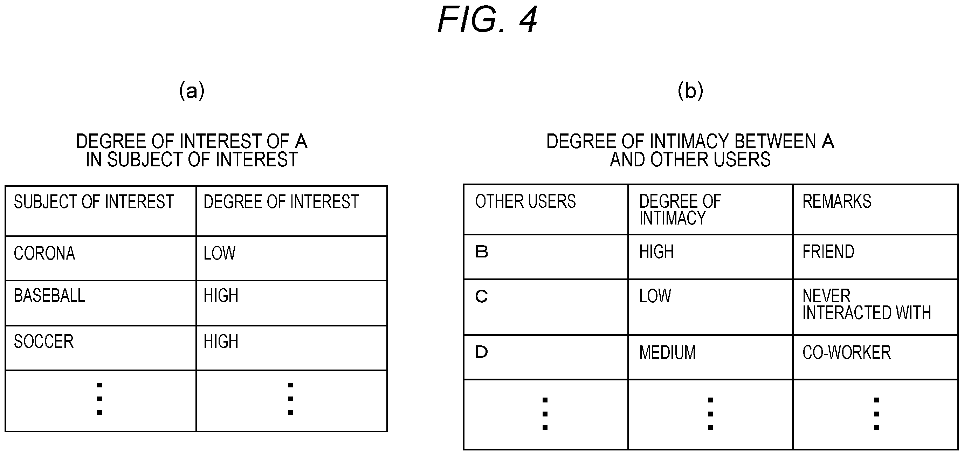

Fig. 4(a) illustrates an example of information regarding a degree of interest of the user A in a subject of interest, but the same applies to the other users. In this example, a degree of interest in "corona" is "low", a degree of interest in "baseball" is "high", and a degree of interest in "soccer" is "high". Note that, in this example, the degree of interest has two levels of "high" and "low", but is not limited thereto.

Fig. 4(b) illustrates an example of information regarding a degree of intimacy between the user A and the other users, but the same applies to the other users. In this example, a degree of intimacy with the user B is "high", a degree of intimacy with the user C is "low", and a degree of intimacy with the user D is "medium". Note that, in this example, the degree of intimacy has three levels of "high", "medium", and "low", but is not limited thereto.

Returning to Fig. 1, the topic classification unit 104 performs processing on the basis of the processing result from the topic analysis unit 102, the attribute information regarding each user held in the user attribute database 103, and the like. The topic classification unit 104 performs processing of obtaining a degree of interest of each user (individual user) for each topic. Furthermore, the topic classification unit 104 performs processing of obtaining a degree of intimacy between an associated participating user and each user (individual user) for each topic.

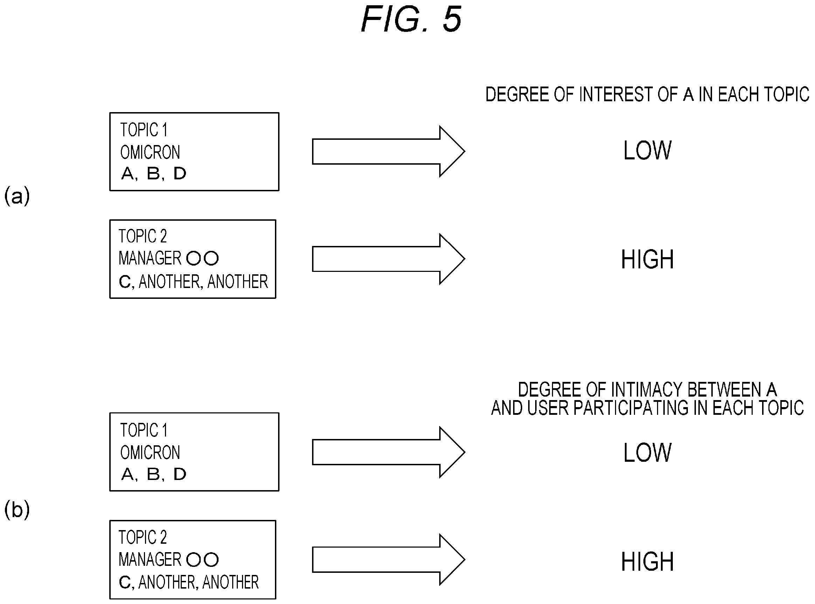

Fig. 5(a) illustrates an example of a degree of interest of the user A in each topic obtained by the topic classification unit 104, but the same applies to the other users. This example shows a case where the information regarding a degree of interest of the user A corresponds to the information illustrated in Fig. 4(a) for the "topic 1" and the "topic 2" illustrated in Fig. 3.

From the information regarding a degree of interest of the user A, indicating that the degree of interest in "corona" is "low", the degree of interest of the user A in the topic 1 related to Omicron is determined to be "low". Furthermore, from the information regarding a degree of interest of the user A, indicating that the degree of interest in "baseball" is "high", the degree of interest of the user A in the topic 2 related to manager ○○ is determined to be "high". Note that, in this example, the degree of interest has two levels of "high" and "low", but is not limited thereto.

Fig. 5(b) illustrates an example of a degree of intimacy between the user A and a user participating in each topic obtained by the topic classification unit 104. This example shows a case where the information regarding a degree of intimacy of the user A corresponds to the information illustrated in Fig. 4(b) for the "topic 1" and the "topic 2" illustrated in Fig. 3.

For the topic 1 related to Omicron, the users A, B, and D are participating users, and from the information regarding a degree of intimacy of the user A, indicating that the degree of intimacy between the user A and the user B is "high", and the degree of intimacy between the user A and the user D is "medium", the degree of intimacy between the user A and the participating users (B, D) is determined to be "high". Furthermore, in a similar manner, for the topic 2 related to manager OO, the degree of intimacy between the user A and the participating users (C, another, another) is determined to be "low". Note that, in this example, the degree of intimacy has two levels of "high" and "low", but is not limited thereto.

Returning to Fig. 1, the display processing unit 105 performs processing of displaying an ongoing topic on a terminal of each user (individual user) on the basis of the processing results from the topic analysis unit 102 and the topic classification unit 104, and the like. In this case, the display processing unit 105 displays an ongoing topic using a summary title.

The display processing unit 105 displays an ongoing topic in any one of the following patterns (1), (2), (3), or (4), for example.
(1) A pattern displayed using only the processing result from the topic analysis unit 102
(2) A pattern displayed using the processing result from the topic analysis unit 102 and the processing result (degree of interest) from the topic classification unit 103
(3) A pattern displayed using the processing result from the topic analysis unit 102 and the processing result (degree of intimacy) from the topic classification unit 103
(4) A pattern displayed using the processing result from the topic analysis unit 102 and the processing result (degree of interest, degree of intimacy) from the topic classification unit 103

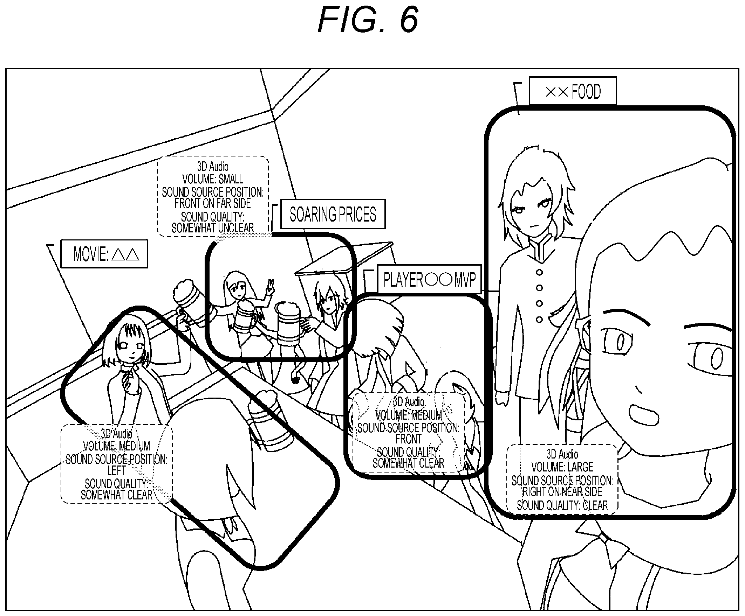

Fig. 6 illustrates a display example of the pattern (1). In this example, an ongoing topic is displayed in a metaverse space. The metaverse space is based on a viewpoint of a user (individual user) to which this display is provided. In this example, there are four ongoing topics, and the topics are displayed with titles of "×× food", "movie: △△", "player ○○ MVP", and "soaring prices". Then, in this case, a user participating in each topic is displayed using an avatar. Here, for example, it is assumed that a user viewing this metaverse space is participating in the topic of "×× food" for which an avatar on the right is displayed in a large size. Note that the display example of the pattern (1) is not limited to an example where such an ongoing topic is displayed in the metaverse space.

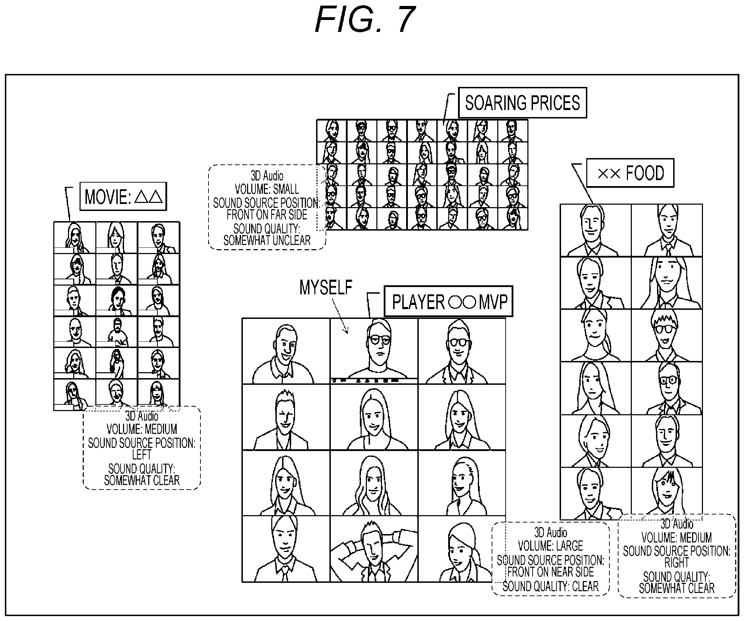

Fig. 7 illustrates a display example of the pattern (2). In this example, an ongoing topic is displayed on a plane. In this example, there are four ongoing topics, and the topics are displayed with titles of "×× food", "movie: △△", "player ○○ MVP", and "soaring prices". Then, in this case, a user participating in each topic is displayed using a face image. In this case, the higher the degree of interest of the user (individual user), the larger the displayed face image of the participating user. The user (individual user) to which this display is provided can determine a level of a degree of interest of the user him/herself in each topic on the basis of the size of the face image of the participating user.

Note that, as the display example of the pattern (2), there are other possible examples. For example, although not illustrated, there is also a possible example where ongoing topics are displayed side by side in a direction of a degree-of-interest axis in descending order of the level of the degree of interest of the user (individual user). In this case, when a plurality of topics is ongoing, the user (individual user) can determine the level of the degree of interest of the user him/herself in each topic on the basis of a position of each topic in the direction of the degree-of-interest axis.

Although no detailed description will be given of a display of the pattern (3), only the degree of interest is replaced with the degree of intimacy, so that the display of the pattern (3) is similar to the display example of the pattern (2) described above.

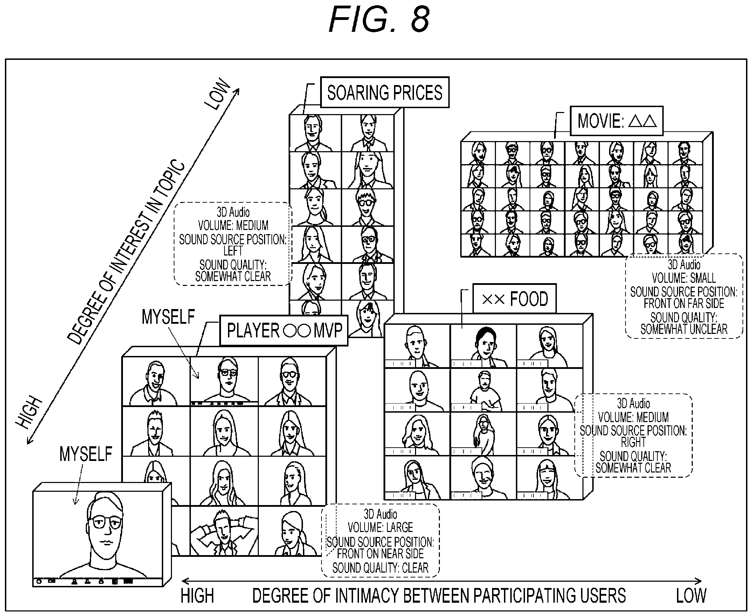

Fig. 8 illustrates a display example of the pattern (4). In this example, a two-dimensional coordinate system formed by the degree-of-interest axis and a degree-of-intimacy axis is set on a plane, and each ongoing topic is arranged and displayed at a coordinate position determined on the basis of the level of the degree of interest of the user (individual user) and the level of the degree of intimacy between the user (individual user) and the participating user associated with the topic. In this example, "Myself" indicates the user (individual user) to which this display is provided. The user (individual user) to which this display is provided can determine the level of the degree of interest of the user him/herself in each topic and the level of the degree of intimacy between the user and the participating user (group) associated with each topic on the basis of the position of each topic arranged at the corresponding two-dimensional coordinates.

In this example, there are four ongoing topics, and the topics are displayed with titles of "×× food", "movie: △△", "player ○○ MVP", and "soaring prices". For example, the topic of "player ○○ MVP" is arranged and displayed at a coordinate position indicating high in level along both the degree-of-interest axis and the degree-of-intimacy axis, and it can be seen that the degree of interest of the user (individual user) is high, and the degree of intimacy between the user (individual user) and the participating user associated with the topic is also high. Furthermore, for example, the topic of "×× food" is arranged and displayed at a coordinate position indicating high in level along the degree-of-interest axis and low in level along the degree-of-intimacy axis, and it can be seen that the degree of interest of the user (individual user) is high, but the degree of intimacy between the user (individual user) and the participating user associated with the topic is low.

Returning to Fig. 1, the voice processing unit 106 performs, on the basis of the processing information from the display processing unit 105, processing of making voices for each topic audible from the terminal of each user (individual user) in a direction and at a volume, and further with sound quality in the present embodiment, the direction, the volume, and the sound quality being associated with a topic display position. In this case, although no detailed description will be given below, the voice processing unit 106 performs the processing on the basis of a well-known object audio (3D audio) rendering technology or the like.

In this case, for example, in the display example in Fig. 6, regarding voices for the topic of "×× food", the volume is "large", the sound source position is "right on near side", the sound quality is "clear", regarding the topic of "player ○○ MVP", the volume is "medium", the sound source position is "front", the sound quality is "somewhat clear", regarding "movie: △△", the volume is "medium", the sound source position is "left", and the sound quality is "somewhat clear", and regarding voices for the topic of "soaring prices", the volume is "small", the sound source position is "front on far side", and the sound quality is "somewhat unclear".

Furthermore, for example, in the display example in Fig. 7, regarding the topic of "player ○○ MVP", the volume is "large", the sound source position is "front on near side", the sound quality is "clear", regarding voices for the topic of "×× food", the volume is "medium", the sound source position is "right", and the sound quality is "somewhat clear", regarding "movie: ΔΔ", the volume is "medium", the sound source position is "left", the sound quality is "somewhat clear", and regarding voices for the topic of "soaring prices", the volume is "low", the sound source position is "front on far side", and the sound quality is "somewhat unclear".

Furthermore, for example, in the display example in Fig. 8, regarding the topic of "player ○○ MVP", the volume is "high", the sound source position is "front on near side", the sound quality is "clear", regarding voices for the topic of "×× food", the volume is "medium", the sound source position is "right", and the sound quality is "somewhat clear", regarding voices for the topic of "soaring prices", the volume is "medium", the sound source position is "left", and the sound quality is "somewhat unclear", and regarding "movie: ΔΔ", the volume is "low", the sound source position is "front on far side", the sound quality is "somewhat unclear".

As described above, the information processing device 100 illustrated in Fig. 1 identifies an ongoing topic on the basis of the multiplex conversation data, gives a title indicating a summary of each topic, and displays the ongoing topic using the title, and the user in remote multiplex conversation can easily recognize not only a topic in which the user is participating but also different topics that are ongoing at the same time, and can also easily find an ongoing topic of interest and newly participate in the topic, so that it is possible to assist the user in having a smooth and effective conversation in the remote multiplex conversation.

Furthermore, the information processing device 100 illustrated in Fig. 1 performs processing of making the voices for each displayed topic audible in the direction and at the volume associated with the topic display position, and the user in the remote multiplex conversation can distinguish the voices for each ongoing topic on the basis of the direction and the volume and can alleviate multiple voice congestion.

Note that it is conceivable that the information processing device 100 illustrated in Fig. 1 causes a server device on a network to perform the processing of the topic analysis unit 102, the topic classification unit 104, and the like, and causes the user terminal (personal computer, smartphone, tablet, or the like) to perform only final display processing or voice output processing, for example. In this case, the multiplex conversation database 101 and the user attribute database 103 are deployed to, for example, the server device.

In this case, data of the voices uttered by each user and data of the video obtained by capturing the image of each user with a camera are transmitted from the user terminal of each user to the server device. The server device performs topic analysis processing and topic classification processing, and further performs video processing, voice processing, and the like as necessary on the basis of the voice data and the video data obtained from each user. Then, the processing results of the topic analysis processing and the topic classification processing, and information such as video data and voice data for display and voice output are transmitted from the server device to each user terminal. Then, the user terminal performs display and voice output processing on the basis of the information transmitted from the server device.

### <2. Second Embodiment>

### [Configuration of information processing device]

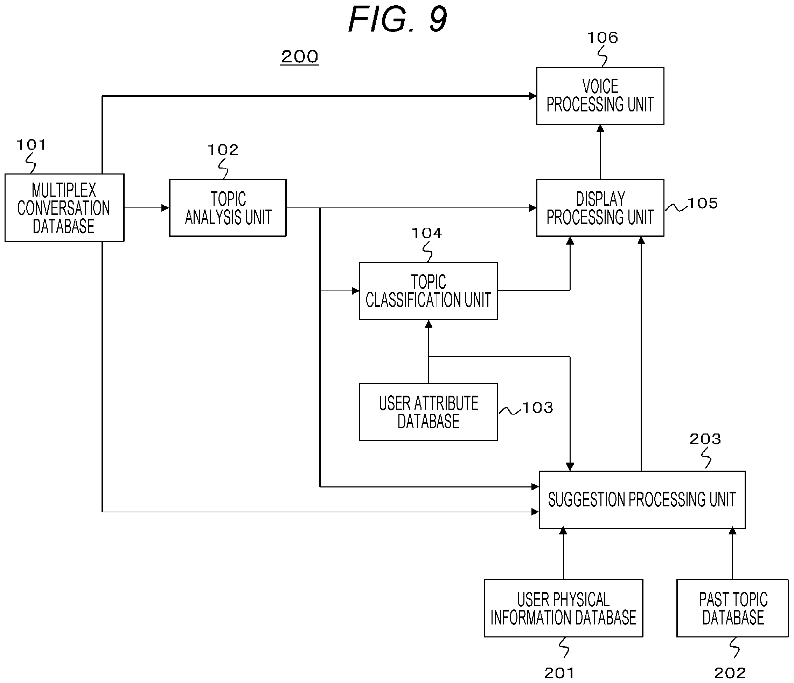

Fig. 9 illustrates a configuration example of an information processing device 200 according to a second embodiment. In Fig. 9, parts corresponding to those in Fig. 1 are denoted by the same reference numerals, and detailed description thereof will be omitted as appropriate. As with the information processing device 100 described above, the information processing device 200 is a device for assisting a user in having a smooth and effective conversation in remote multiplex conversation (a meeting, a drinking party, or the like), and is managed by an organizer of the remote multiplex conversation.

The information processing device 200 includes a user physical information database 201, a past topic database 202, and a suggestion processing unit 203 in addition to the multiplex conversation database 101, the topic analysis unit 102, the user attribute database 103, the topic classification unit 104, the display processing unit 105, and the voice processing unit 106. The multiplex conversation database 101, the topic analysis unit 102, the user attribute database 103, the topic classification unit 104, the display processing unit 105, and the voice processing unit 106 are similar to those described for the information processing device 100 described above, so that no description will be given below of such components.

The user physical information database 201 stores physical information regarding each user. The physical information stored in the user physical information database 201 is updated sequentially over time to reflect the latest data. In this embodiment, the physical information is information for obtaining a degree of excitement such as heart rate data, and information for obtaining a degree of relaxation such as electroencephalographic data.

The past topic database 202 holds, as success example data, data related to a topic that is higher in degree of satisfaction than a threshold among topics in which each user (individual user) participated in the past with the data associated with each user. The success example data includes at least data of a topic and a degree of satisfaction of the user, and further includes data such as a degree of interest of the user in the topic, a degree of intimacy between the user and the other users who participated in the topic, a degree of utterance of the user, a degree of excitement of the user, a degree of relaxation of the user, and a degree of fitting with the topic and a group of the user. Here, the degree of interest, the degree of intimacy, the degree of utterance, the degree of excitement, and the degree of relaxation each have a level expressed on a scale of, for example, 1 to 10, and the degree of fitting is, for example, a value obtained by adding up the degree of interest and the degree of intimacy, and the degree of satisfaction is, for example, a value obtained by adding up the degree of utterance, the degree of excitement, and the degree of relaxation.

The suggestion processing unit 203 performs processing of making a suggestion to each user (individual user). Then, the suggestion processing unit 203 transmits suggestion information to the display processing unit 105. As a result, the suggestion content is displayed together with an ongoing topic on the terminal of each user (individual user).

In this case, the suggestion processing unit 203 performs the processing of making a suggestion on the basis of the processing result from the topic analysis unit 102, the attribute information regarding each user held in the user attribute database 103, the multiplex conversation data stored in the multiplex conversation database 101, the physical information regarding each user stored in the user physical information database 201, the success example data held in the past topic database 202, and the like.

The suggestion processing unit 203 performs, for example, (1) processing of suggesting, to each user (individual user), participation in a different topic that is currently ongoing, or (2) processing of suggesting, to each user, a topic that is not currently ongoing, and further, a participating user (group) who discusses the topic.

First, (1) processing of suggesting participation in a different topic that is currently ongoing will be described. Here, processing of making a suggestion to a certain individual user (hereinafter, referred to as "target user" as appropriate) will be described as an example. Although no detailed description will be given below, the same applies to processing of making a suggestion to other users.

In this case, the suggestion processing unit 203 suggests participation in a different topic that is currently ongoing on the basis of a degree of satisfaction with the topic in which the user is currently participating. For example, in a case where the degree of satisfaction with the topic in which the user is currently participating is lower than the threshold, and a degree of fitting with the different topic that is currently ongoing is higher than a degree of fitting with the topic in which the user is currently participating, the suggestion processing unit 203 suggests participation in the different topic.

Here, the suggestion processing unit 203 obtains a degree of utterance of the target user, a degree of excitement of the target user, and a degree of relaxation of the target user regarding the topic in which the target user is currently participating, and adds up the degrees to obtain a degree of satisfaction. In this case, the degree of utterance of the target user is obtained on the basis of frequency of utterance about the topic in which the target user is currently participating by consulting the multiplex conversation data stored in the multiplex conversation database 101. Furthermore, the degree of excitement of the target user is obtained on the basis of, for example, heart rate data of the target user stored in the user physical information database 201. Furthermore, the degree of relaxation of the target user is obtained on the basis of, for example, electroencephalographic data of the target user stored in the user physical information database 201.

Furthermore, regarding the topic in which the target user is currently participating, the suggestion processing unit 203 obtains a degree of interest of the target user in the topic and a degree of intimacy between the target user and the other users participating in the topic, and adds up the degrees to obtain a degree of fitting. In this case, the degree of interest is obtained on the basis of the information regarding a degree of interest of the target user in a subject of interest (see Fig. 4(a)) held in the user attribute information database 103. Furthermore, the degree of intimacy is obtained on the basis of the information regarding a degree of intimacy between the target user and the other users (see Fig. 4(b)) held in the user attribute information database 103.

Furthermore, regarding the different topic that is currently ongoing, the suggestion processing unit 203 obtains a degree of interest of the target user in the topic and a degree of intimacy between the target user and the other users participating in the topic, and adds up the degrees to obtain a degree of fitting.

Then, the suggestion processing unit 203 determines whether or not the degree of satisfaction with the topic in which the user is currently participating is lower than the threshold. In a case where the degree of satisfaction is lower than the threshold, the suggestion processing unit 203 next determines whether or not the degree of fitting with the different topic that is currently ongoing is higher than the degree of fitting with the topic in which the user is currently participating. In a case where the degree of fitting with the different topic that is currently ongoing is higher than the degree of fitting with the topic in which the user is currently participating, the participation in the different topic is suggested to the target user.

Note that in a case where there is a plurality of different topics that is currently ongoing and is higher in the degree of fitting than the topic in which the user is currently participating, the suggestion processing unit 203 selects a topic that is higher in the degree of fitting. Furthermore, in a case where there is a plurality of different topics that is currently ongoing and is higher in the degree of fitting than the topic in which the user is currently participating, the different topics having the same degree of fitting, the suggestion processing unit 203 consults, for example, the success example data of the target user held in the past topic database 202 to check whether the degree of satisfaction increases on the basis of a higher degree of interest or a higher degree of intimacy, and selects, on the basis of the check result, a topic having a combination of the level of the degree of interest and the level of the degree of intimacy that makes the degree of satisfaction higher.

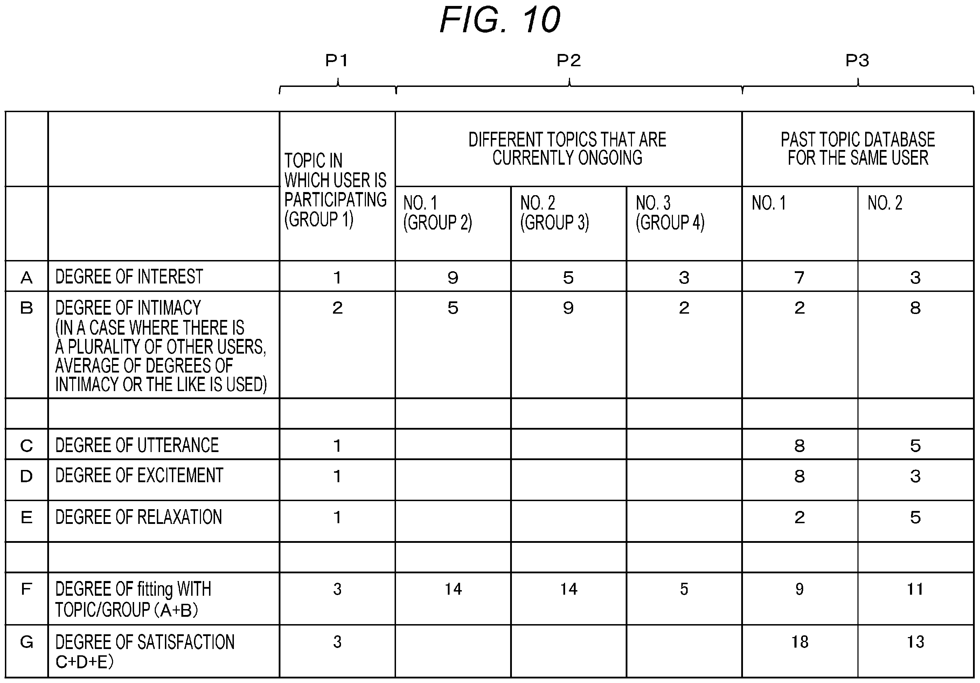

A part P1 in Fig. 10 shows an example of the degree of interest, the degree of intimacy, the degree of utterance, the degree of excitement, the degree of relaxation, the degree of fitting, and the degree of satisfaction obtained for the topic in which the target user is currently participating. Note that a group including users that are participating in the topic in which the target user is currently participating is referred to as "group 1".

A part P2 in Fig. 10 shows an example of the degree of interest, the degree of intimacy, and the degree of fitting obtained for the different topics that are currently ongoing. This example shows a case where there are three topics of "No. 1", "No. 2", and "No. 3" as the different topics that are currently ongoing. Note that groups including users participating in each of the topics of "No. 1", "No. 2", and "No. 3" are referred to as "group 2", "group 3", and "group 4", respectively.

In the example illustrated in Fig. 10, it is assumed that the degree of satisfaction of the target user obtained for the topic in which the target user is currently participating is "3" that is lower than the threshold (here, for example, the threshold is "10"), and the target user is not satisfied with the topic in which the target user is currently participating. Then, in this example, the degrees of satisfaction of the target user obtained for the different topics "No. 1", "No. 2", and "No. 3" that are currently ongoing are "14", "14", and "5", respectively, that are higher than "3", which is the degree of satisfaction of the target user obtained for the topic in which the target user is currently participating.

In this case, participation in the topic with which the degree of satisfaction is "14" is suggested, but the suggestion holds true for two topics of "No. 1" and "No. 2", so that either of the two topics is determined to be a topic in which participation is suggested by consulting the success example data of the target user. A part P3 in Fig. 10 shows an example of the success example data of the target user. In this example, the degree of satisfaction becomes high in a case where the degree of interest is higher than the degree of intimacy as compared with a case where the degree of intimacy is higher than the degree of interest, so that participation in the topic of "No. 1" for which the degree of interest is higher than the degree of intimacy is suggested to the target user.

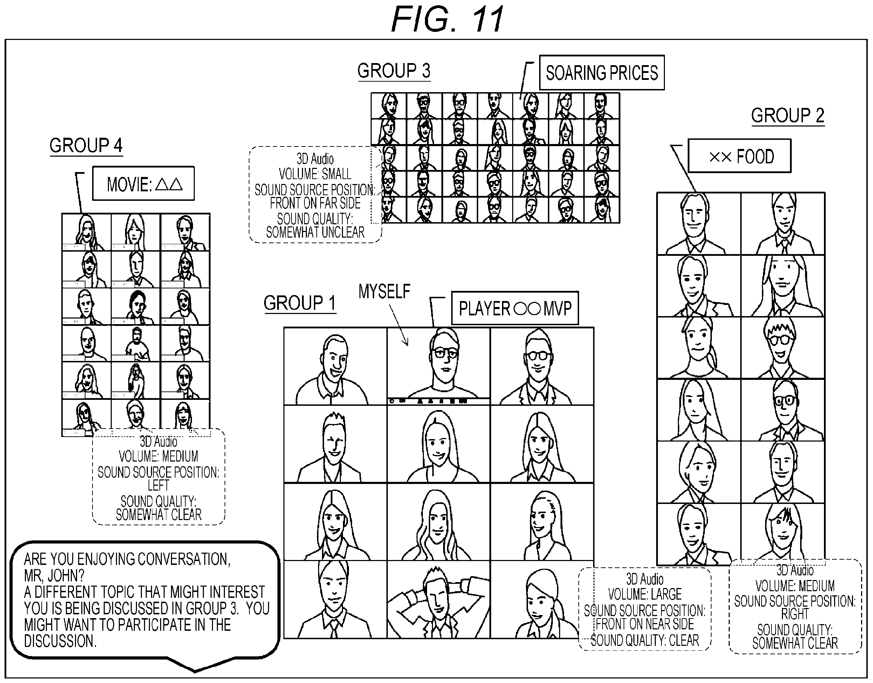

Fig. 11 illustrates a display example of the terminal of the target user, in which not only an ongoing topic but also a suggestion to participate in a different topic that is currently ongoing, here, the topic "soaring prices" discussed in the group 3 is displayed to John who is the target user. Note that this display example corresponds to the display example illustrated in Fig. 7, but may correspond to the display example in Fig. 6 or Fig. 8.

Next, (2) processing of suggesting a topic that is not currently ongoing, and further, a participating user (group) who discusses the topic will be described. Here, processing of making a suggestion to a certain individual user (hereinafter, referred to as "target user" as appropriate) will be described as an example. Although no detailed description will be given below, the same applies to processing of making a suggestion to other users.

In this case, the suggestion processing unit 203 suggests a topic that is not currently ongoing on the basis of the degree of satisfaction with the topic in which the target user is currently participating. For example, in a case where the degree of satisfaction with the topic in which the target user is currently participating is lower than the threshold, and a degree of satisfaction with a predetermined topic of another user who is similar in attribute to the target user and participated in the predetermined topic in the past is higher than the threshold, the suggestion processing unit 203 suggests the predetermined topic as the topic that is not currently ongoing. Furthermore, the suggestion processing unit 203 further makes, to the target user, a suggestion to discuss the topic (predetermined topic) that is not currently ongoing together with participating users (group) having the highest degree of intimacy with the target user among participating users participating in each currently ongoing topic.

Here, the suggestion processing unit 203 obtains a degree of utterance of the target user, a degree of excitement of the target user, and a degree of relaxation of the target user regarding the topic in which the target user is currently participating, and adds up the degrees to obtain a degree of satisfaction. In this case, the degree of utterance of the target user is obtained on the basis of frequency of utterance about the topic in which the target user is currently participating by consulting the multiplex conversation data stored in the multiplex conversation database 101. Furthermore, the degree of excitement of the target user is obtained on the basis of, for example, heart rate data of the target user stored in the user physical information database 201. Furthermore, the degree of relaxation of the target user is obtained on the basis of, for example, electroencephalographic data of the target user stored in the user physical information database 201.

Furthermore, regarding the topic in which the target user is currently participating, the suggestion processing unit 203 obtains a degree of interest of the target user in the topic and a degree of intimacy between the target user and the other users participating in the topic, and adds up the degrees to obtain a degree of fitting. In this case, the degree of interest is obtained on the basis of the information regarding a degree of interest of the target user in a subject of interest (see Fig. 4(a)) held in the user attribute information database 103. Furthermore, the degree of intimacy is obtained on the basis of the information regarding a degree of intimacy between the target user and the other users (see Fig. 4(b)) held in the user attribute information database 103.

Furthermore, regarding the different topic that is currently ongoing, the suggestion processing unit 203 obtains a degree of interest of the target user in the topic and a degree of intimacy between the target user and the other users participating in the topic, and adds up the degrees to obtain a degree of fitting.

Then, the suggestion processing unit 203 determines whether or not the degree of satisfaction with the topic in which the user is currently participating is lower than the threshold. In a case where the degree of satisfaction is lower than the threshold, the success example data of the predetermined topic of another user similar in attribute to the target user held in the past topic database 202 is consulted, and in a case where the degree of satisfaction is higher than the threshold, the predetermined topic is suggested to the target user. Here, the predetermined topic of another user similar in attribute to the target user can be distinguished on the basis of a similarity in degree of interest in the predetermined topic between the target user and another user.

Furthermore, the suggestion processing unit 203 confirms a topic having the highest degree of intimacy among the different topics that are currently ongoing, and makes, to the target user, a suggestion to discuss the suggested predetermined topic described above together with the participating users (group) associated with the topic having the highest degree of intimacy.

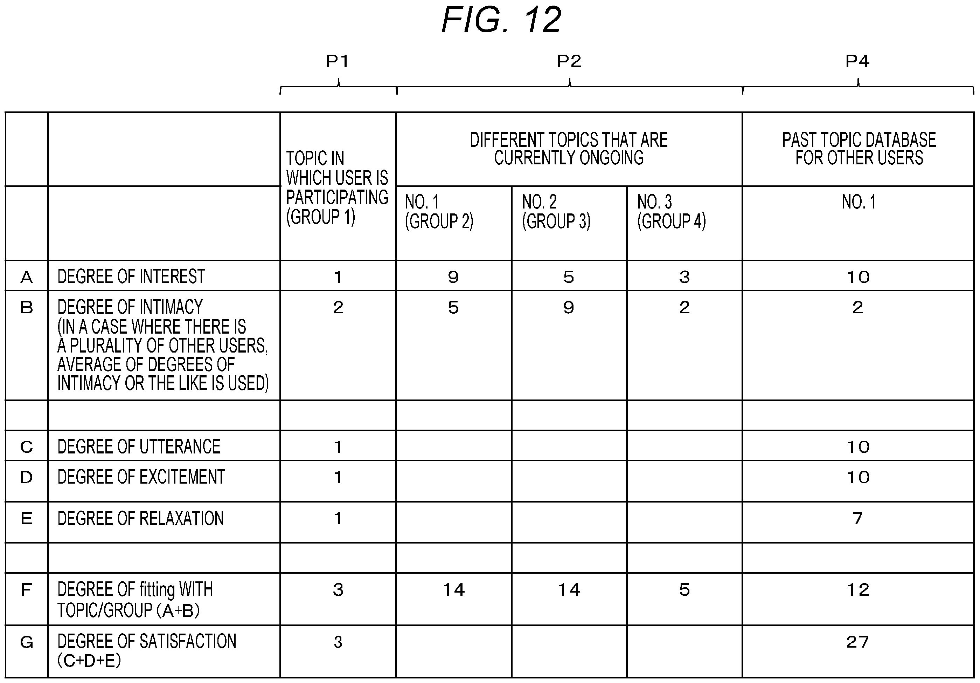

A part P1 in Fig. 12 shows an example of the degree of interest, the degree of intimacy, the degree of utterance, the degree of excitement, the degree of relaxation, the degree of fitting, and the degree of satisfaction obtained for the topic in which the target user is currently participating. Note that a group including users that are participating in the topic in which the target user is currently participating is referred to as "group 1".

A part P2 in Fig. 12 shows an example of the degree of interest, the degree of intimacy, and the degree of fitting obtained for different topics that are currently ongoing. This example shows a case where there are three topics of "No. 1", "No. 2", and "No. 3" as the different topics that are currently ongoing. Note that groups including users participating in each of the topics of "No. 1", "No. 2", and "No. 3" are referred to as "group 2", "group 3", and "group 4", respectively.

In the example illustrated in Fig. 12, it is assumed that the degree of satisfaction of the target user obtained for the topic in which the target user is currently participating is "3" that is lower than the threshold (here, for example, the threshold is "10"), and the target user is not satisfied with the topic in which the target user is currently participating.

Therefore, the success example data of the predetermined topic of another user similar in attribute to the target user held in the past topic database 202 is consulted. A part P4 in Fig. 12 shows an example of the success example data of the predetermined topic "No. 1" to be consulted. In this case, the degree of satisfaction is "27" that is higher than the threshold (here, for example, the threshold is "20"), and the predetermined topic "No. 1" is suggested to the target user.

Furthermore, in the example illustrated in Fig. 12, among the degrees of intimacy obtained for the different topics "No. 1", "No. 2", and "No. 3" that are currently ongoing, the degree of intimacy for the topic of "No. 2" is "9", which is the highest. Therefore, a suggestion to discuss the topic of "No. 2" together with the participating users (group) associated with the topic of "No. 2" is made to the target user.

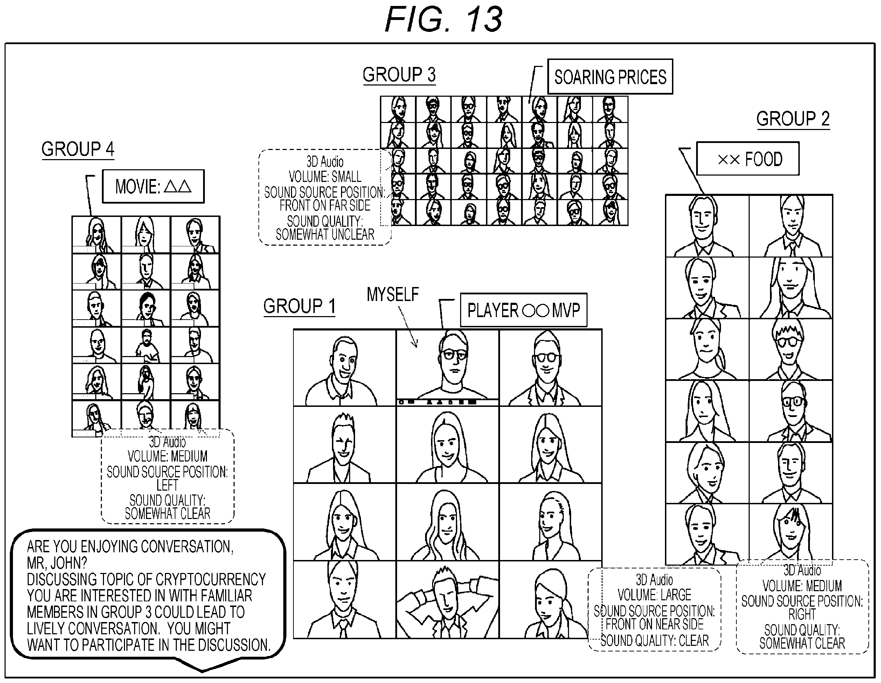

Fig. 13 illustrates a display example of the terminal of the target user, in which not only an ongoing topic but also a suggestion to discuss a topic of cryptocurrency that is not ongoing with members (participating users) of the group 3 is displayed to John who is the target user. Note that this display example corresponds to the display example illustrated in Fig. 7, but may correspond to the display example in Fig. 6 or Fig. 8.

As described above, the information processing device 200 illustrated in Fig. 9 can not only produce an effect similar to the effect produced by the information processing device 100 illustrated in Fig. 1, but also suggest, to each user (individual user), participation in a different topic that is currently ongoing or suggest a topic that is not currently ongoing, and further, a participating user (group) who discusses the topic, so that it is possible to assist the user in having a smooth and effective conversation in the remote multiplex conversation.

Note that, in the above description, the degree of satisfaction is a value obtained by adding up the degree of utterance, the degree of excitement, and the degree of relaxation, but is not limited to such a value. For example, the value may be obtained by adding up some of the degrees and another element instead of adding up all of the degree of utterance, the degree of excitement, and the degree of relaxation. Furthermore, for example, in order to calculate the degree of satisfaction, it is also conceivable to assign a weight to each of the degree of excitement and the degree of relaxation in accordance with the type of remote multiplex conversation such as a private drinking party or a pan-industry social event. For example, in a case of a private drinking party, since the degree of relaxation is more significant than the degree of excitement, the weight assigned to the degree of relaxation is made larger than the weight assigned to the degree of excitement. Furthermore, for example, in a case of a pan-industry social event, since the degree of excitement is more significant than the degree of relaxation, the weight assigned to the degree of excitement is made larger than the degree of relaxation.

### [Configuration example of computer]

The processing in the information processing devices 100 and 200 illustrated in Figs. 1 and 9 described above can be performed by hardware or by software. In a case where the series of processing is performed by software, a program constituting the software is installed from a recording medium into, for example, a computer built into dedicated hardware or a general-purpose computer capable of performing various functions by installing various programs.

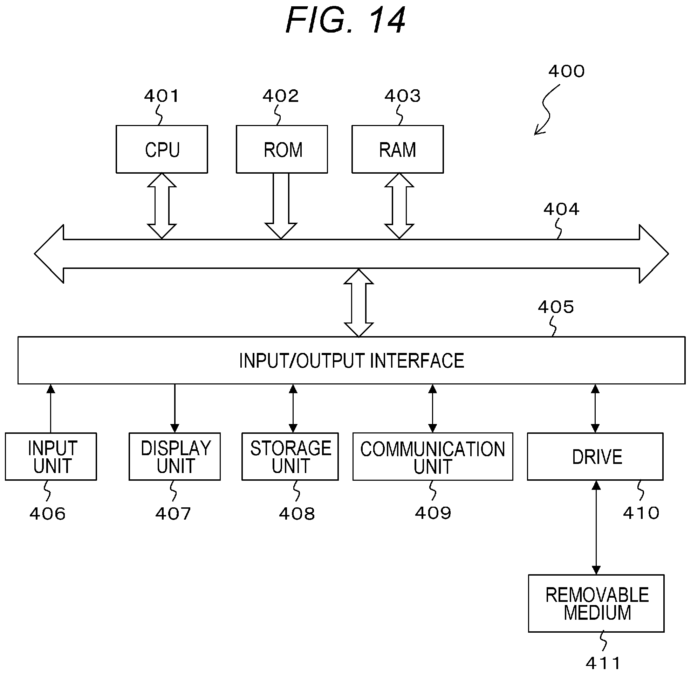

Fig. 14 is a block diagram illustrating a configuration example of hardware of a computer 400 that performs the above-described series of processing by a program.

In the computer 400, a central processing unit (CPU) 401, a read only memory (ROM) 402, and a random access memory (RAM) 403 are mutually connected by a bus 404.

The bus 404 is further connected with an input/output interface 405. To the input/output interface 405, an input unit 406, an output unit 407, a recording unit 408, a communication unit 409, and a drive 410 are connected.

The input unit 406 includes an input switch, a button, a microphone, an image sensor, and the like. The output unit 407 includes a display, a speaker, and the like. The recording unit 408 includes a hard disk, a non-volatile memory, and the like. The communication unit 409 includes a network interface or the like. The drive 410 drives a removable recording medium 411 such as a magnetic disk, an optical disc, a magneto-optical disk, or a semiconductor memory.

In the computer 400 configured as described above, the CPU 401 loads, for example, a program recorded in the recording unit 408 into the R_AM 403 via the input/output interface 405 and the bus 404, and executes the program, so as to perform the above-described series of processing.

The program executed by the computer 400 (the CPU 401) can be provided by being recorded on, for example, the removable recording medium 411 as a package medium or the like. Furthermore, the program can be provided via a wired or wireless transmission medium such as a local area network, the Internet, or digital satellite broadcasting.

In the computer 400, the program can be installed in the recording unit 408 via the input/output interface 405 by mounting the removable recording medium 411 to the drive 410. Furthermore, the program can be received by the communication unit 409 via a wired or wireless transmission medium, and installed in the recording unit 408. In addition, the program can be pre-installed in the ROM 402 or the recording unit 408.

Note that the program executed by the computer may be a program in which processing is performed in time series in the order described in the present description, or may be a program in which processing is performed in parallel or at necessary timing such as when a call is made.

### <3. Modifications>

Note that the preferred embodiments of the present disclosure have been described in detail with reference to the accompanying drawings, but the technical scope of the present disclosure is not limited to such examples. It is apparent that a person having ordinary knowledge in the technical field of the present disclosure can achieve various variation examples or modification examples within the scope of the technical idea recited in claims, and it will be naturally understood that they also belong to the technical scope of the present disclosure.

Furthermore, the effects described in the present specification are merely exemplary or illustrative, and not restrictive. That is, the technology according to the present disclosure can exhibit other effects apparent to those skilled in the art from the description of the present specification, in addition to the effects described above or instead of the effects described above.

Furthermore, the present technology may also have the following configurations.
(1) An information processing device including
   a display processing unit that performs processing of displaying, on the basis of a result of topic analysis processing of identifying an ongoing topic on the basis of multiplex conversation data and giving a title indicating a summary of each topic, the ongoing topic using the title.
(2) The information processing device according to the above (1), further including
   a voice processing unit that performs processing of making voices for each displayed topic audible in a direction and at a volume associated with a topic display position.
(3) The information processing device according to the above (1) or (2), in which
   in the topic analysis processing, processing of associating a participating user with each topic is further performed, and
   the display processing unit performs processing of further displaying a participating user associated with each displayed topic.
(4) The information processing device according to the above (3), in which
   the display processing unit displays the participating user using a face image, or displays the ongoing topic in a metaverse space and displays the participating user using an avatar.
(5) The information processing device according to the above (3) or (4), in which
   the display processing unit displays, on the basis of a result of topic classification processing of obtaining a degree of interest of an individual user in each topic, the ongoing topic in a manner as to make a level of the degree of interest of the individual user visible.
(6) The information processing device according to the above (5), in which
   the display processing unit displays the ongoing topics side by side in a direction of a degree-of-interest axis in descending order of the level of the degree of interest of the individual user.
(7) The information processing device according to the above (5), in which
   the display processing unit displays the participating user associated with each displayed topic using a face image and enlarges a face image of a participating user associated with a topic having a higher degree of interest.
(8) The information processing device according to the above (3), in which
   the display processing unit displays, on the basis of a result of topic classification processing of obtaining a degree of intimacy between the associated participating user and an individual user for each topic, the ongoing topic in a manner as to make a level of the degree of intimacy between the associated participating user and the individual user visible.
(9) The information processing device according to the above (8), in which
   the display processing unit displays the ongoing topics side by side in a direction of a degree-of-intimacy axis in descending order of the level of the degree of intimacy between the associated participating user and the individual user.
(10) The information processing device according to the above (3), in which
   the display processing unit displays, on the basis of a result of topic classification processing of obtaining a degree of interest of an individual user and obtaining a degree of intimacy between the associated participating user and the individual user for each topic, the ongoing topic in a manner as to make a level of the degree of interest of the individual user and a level of the degree of intimacy between the associated participating user and the individual user visible.
(11) The information processing device according to the above (10), in which
   the display processing unit arranges and displays the ongoing topic at a coordinate position in a two-dimensional coordinate system formed by a degree-of-interest axis and a degree-of-intimacy axis, the coordinate position being determined on the basis of the level of the degree of interest of the individual user and the level of the degree of intimacy between the associated participating user and the individual user.
(12) The information processing device according to any one of the above (1) to (11), in which
   the display processing unit performs processing of further displaying, on the basis of a result of suggestion processing of suggesting, to an individual user, participation in a different topic that is currently ongoing in accordance with a degree of satisfaction with a topic in which the individual user is currently participating, the suggestion to participate in the different topic that is currently ongoing.
(13) The information processing device according to the above (12), in which
   in the suggestion processing, the degree of satisfaction is obtained on the basis of frequency of utterance of the individual user and/or physical information regarding the individual user.
(14) The information processing device according to the above (12) or (13), in which
   in the suggestion processing, in a case where the degree of satisfaction with the topic in which the individual user is currently participating is lower than a threshold, and a degree of fitting with the different topic that is currently ongoing is higher than a degree of fitting with the topic in which the individual user is currently participating, the participation in the different topic is suggested.
(15) The information processing device according to the above (14), in which
   in the suggestion processing, the degree of fitting is obtained on the basis of a degree of interest of the individual user in a topic and a degree of intimacy between a participating user associated with the topic and the individual user.
(16) The information processing device according to any one of the above (1) to (15), in which
   the display processing unit performs processing of further displaying, on the basis of a result of suggestion processing of suggesting a topic that is not currently ongoing in accordance with a degree of satisfaction with a topic that the individual user is currently participating, the suggestion of the topic that is not currently ongoing.
(17) The information processing device according to the above (16), in which
   in the suggestion processing, in a case where the degree of satisfaction with the topic in which the individual user is currently participating is lower than a threshold, and a degree of satisfaction with a predetermined topic in which another user similar in attribute to the individual user participated in the past is higher than the threshold, the predetermined topic is suggested as the topic that is not currently ongoing.
(18) The information processing device according to the above (16) or (17), in which
   in the suggestion processing, processing of further making, to the individual user, a suggestion to discuss the topic that is not currently ongoing together with a participating user having a highest degree of intimacy with the individual user among participating users participating in each currently ongoing topic is performed, and
   the display processing unit performs processing of further displaying the suggestion to discuss the topic that is not currently ongoing together with the participating user having the highest degree of intimacy.
(19) An information processing method including:
   performing processing of identifying an ongoing topic on the basis of multiplex conversation data and giving a title indicating a summary of each topic.
(20) A program for causing a computer to execute an information processing method, the method including:
   performing processing of identifying an ongoing topic on the basis of multiplex conversation data and giving a title indicating a summary of each topic.

### REFERENCE SIGNS LIST

- 100: Information processing device
- 101: Multiplex conversation database
- 102: Topic analysis unit
- 103: User attribute database
- 104: Topic classification unit
- 105: Display processing unit
- 106: Voice processing unit
- 200: Information processing device
- 201: User physical information database
- 202: Past topic database
- 203: Suggestion processing unit

## Claims

1. An information processing device comprising
a display processing unit that performs processing of displaying, on a basis of a result of topic analysis processing of identifying an ongoing topic on a basis of multiplex conversation data and giving a title indicating a summary of each topic, the ongoing topic using the title.

2. The information processing device according to claim 1, further comprising
a voice processing unit that performs processing of making voices for each displayed topic audible in a direction and at a volume associated with a topic display position.

3. The information processing device according to claim 1, wherein
in the topic analysis processing, processing of associating a participating user with each topic is further performed, and
the display processing unit performs processing of further displaying a participating user associated with each displayed topic.

4. The information processing device according to claim 3, wherein
the display processing unit displays the participating user using a face image, or displays the ongoing topic in a metaverse space and displays the participating user using an avatar.

5. The information processing device according to claim 3, wherein
the display processing unit displays, on a basis of a result of topic classification processing of obtaining a degree of interest of an individual user in each topic, the ongoing topic in a manner as to make a level of the degree of interest of the individual user visible.

6. The information processing device according to claim 5, wherein
the display processing unit displays the ongoing topics side by side in a direction of a degree-of-interest axis in descending order of the level of the degree of interest of the individual user.

7. The information processing device according to claim 5, wherein
the display processing unit displays the participating user associated with each displayed topic using a face image and enlarges a face image of a participating user associated with a topic having a higher degree of interest.

8. The information processing device according to claim 3, wherein
the display processing unit displays, on a basis of a result of topic classification processing of obtaining a degree of intimacy between the associated participating user and an individual user for each topic, the ongoing topic in a manner as to make a level of the degree of intimacy between the associated participating user and the individual user visible.

9. The information processing device according to claim 8, wherein
the display processing unit displays the ongoing topics side by side in a direction of a degree-of-intimacy axis in descending order of the level of the degree of intimacy between the associated participating user and the individual user.

10. The information processing device according to claim 3, wherein
the display processing unit displays, on a basis of a result of topic classification processing of obtaining a degree of interest of an individual user and obtaining a degree of intimacy between the associated participating user and the individual user for each topic, the ongoing topic in a manner as to make a level of the degree of interest of the individual user and a level of the degree of intimacy between the associated participating user and the individual user visible.

11. The information processing device according to claim 10, wherein
the display processing unit arranges and displays the ongoing topic at a coordinate position in a two-dimensional coordinate system formed by a degree-of-interest axis and a degree-of-intimacy axis, the coordinate position being determined on a basis of the level of the degree of interest of the individual user and the level of the degree of intimacy between the associated participating user and the individual user.

12. The information processing device according to claim 1, wherein
the display processing unit performs processing of further displaying, on a basis of a result of suggestion processing of suggesting, to an individual user, participation in a different topic that is currently ongoing in accordance with a degree of satisfaction with a topic in which the individual user is currently participating, the suggestion to participate in the different topic that is currently ongoing.

13. The information processing device according to claim 12, wherein
in the suggestion processing, the degree of satisfaction is obtained on a basis of frequency of utterance of the individual user and/or physical information regarding the individual user.

14. The information processing device according to claim 12, wherein
in the suggestion processing, in a case where the degree of satisfaction with the topic in which the individual user is currently participating is lower than a threshold, and a degree of fitting with the different topic that is currently ongoing is higher than a degree of fitting with the topic in which the individual user is currently participating, the participation in the different topic is suggested.

15. The information processing device according to claim 14, wherein
in the suggestion processing, the degree of fitting is obtained on a basis of a degree of interest of the individual user in a topic and a degree of intimacy between a participating user associated with the topic and the individual user.

16. The information processing device according to claim 1, wherein
the display processing unit performs processing of further displaying, on a basis of a result of suggestion processing of suggesting a topic that is not currently ongoing in accordance with a degree of satisfaction with a topic that the individual user is currently participating, the suggestion of the topic that is not currently ongoing.

17. The information processing device according to claim 16, wherein
in the suggestion processing, in a case where the degree of satisfaction with the topic in which the individual user is currently participating is lower than a threshold, and a degree of satisfaction with a predetermined topic in which another user similar in attribute to the individual user participated in the past is higher than the threshold, the predetermined topic is suggested as the topic that is not currently ongoing.

18. The information processing device according to claim 16, wherein
in the suggestion processing, processing of further making, to the individual user, a suggestion to discuss the topic that is not currently ongoing together with a participating user having a highest degree of intimacy with the individual user among participating users participating in each currently ongoing topic is performed, and
the display processing unit performs processing of further displaying the suggestion to discuss the topic that is not currently ongoing together with the participating user having the highest degree of intimacy.

19. An information processing method comprising:
performing processing of identifying an ongoing topic on a basis of multiplex conversation data and giving a title indicating a summary of each topic.

20. A program for causing a computer to execute an information processing method, the method comprising:
performing processing of identifying an ongoing topic on a basis of multiplex conversation data and giving a title indicating a summary of each topic.
